# EUROPÄISCHE PATENTSCHRIFT

(11) **EP 1 232 211 B1**
(45) Veröffentlichungstag und Bekanntmachung des Hinweises auf die Patenterteilung: **04.06.2003**
(21) Anmeldenummer: 00975909.3
(22) Anmeldetag: 25.10.2000
(51) Int. Cl.: C08K 5/15, C08L 33/02, B27N 3/02, D04H 1/64

(54) **BINDEMITTEL ZUR HERSTELLUNG VON FORMKÖRPERN UND UNTER VERWENDUNG DIESES BINDEMITTELS HERGESTELLTE FORMKÖRPER**
BINDING AGENT FOR PRODUCING SHAPED BODIES AND SHAPED BODIES PRODUCED BY USING SAID BINDING AGENT
LIANT UTILISE POUR LA PRODUCTION DE CORPS MOULES ET CORPS MOULES PRODUITS PAR UTILISATION DUDIT LIANT

(30) Priorität: 24.11.1999 DE 19956420
(43) Veröffentlichungstag der Anmeldung: 21.08.2002
(73) Patentinhaber: Alberdingk Boley GmbH, 47829 Krefeld (DE)
(72) Erfinder: HÖLDERLE, Matthias, 47798 Krefeld (DE); WEITZNER, Wilhelm, 47445 Moers (DE)
(74) Vertreter: Klöpsch, Gerald, Dr.-Ing.
(86) Internationale Anmeldenummer: EP0010496
(87) Internationale Veröffentlichungsnummer: WO01038430

(56) Entgegenhaltungen:
- EP-A- 0 445 578

## Beschreibung

Zur Herstellung von Formkörpern aus natürlichen oder synthetischen feinteiligen oder fasrigen Materialien werden Bindemittel benötigt.

Als Bindemittel für solche Formkörper werden vielfach Phenolformaldehyd-Harze, Melamin/Formaldehyd-Harze, Furfurolharze, Aminoplaste oder Stärke verwendet. Diese bekannten Produkte weisen entweder den Nachteil auf, daß sie im Laufe der Zeit flüchtige, niedermolekulare Bindemittelbestandteile wie Formaldehyd abgeben oder aber, daß ihre Formbeständigkeit unter erhöhter Luftfeuchtigkeit nachläßt.

Zur Beseitigung dieser Nachteile werden in der EP 0 445 578 B1 Bindemittel eingesetzt, die ein wäßriges Gemisch aus wenigstens einer hochmolekularen Polycarbonsäure und wenigstens einem mehrwertigen Amin, Alkanolamin oder einem mehrwertigen Alkohol in gelöster oder dispers verteilter Form enthalten. Zur Herstellung der entsprechenden Formkörper werden die feinteiligen Materialien, aus denen der Formkörper besteht (z. B. Holzspäne) mit der wäßrigen Mischung des Bindemittels vermischt, der entstandene Brei geformt und sodann bei einer Temperatur von 100 bis 250°C getrocknet, wobei mit der Trocknung die Kondensationsreaktion der Polycarbonsäure mit dem Amin oder dem mehrwertigen Alkohol unter Veresterung oder Amidbildung erfolgt.

Zur Verbesserung der Wasserfestigkeit der in der EP 0 445 578 B1 beschriebenen Formkörper wird in der DE 196 06 393 A1 ein Bindemittel fiir Fasern, Schnitzel oder Späne beschrieben, welches
A) ein durch radikalische Polymerisation erhaltenes Polymerisat, das zu 5 bis 100 Gew.-% aus einem ethylenisch ungesättigten Säureanhydrid oder einer ethylenisch ungesättigten Dicarbonsäure, deren Carbonsäuregruppen eine Anhydridgruppe bilden können besteht sowie
B) ein Alkanolamin mit mindestens zwei Hydroxylgruppen enthält.

Neben dem ethylenisch ungesättigten Monomer auf Basis einer ungesättigten Dicarbonsäure kann das Polymerisat A) auch noch andere Monomere wie eine ungesättigte Monocarbonsäure, ein Olefin oder ein anderes Derivat einer ungesättigten Monocarbonsäure wie ein Amid enthalten.

Aus der EP 0 583 086 B sind ebenfalls bereits formaldehydfreie wäßrige Bindemittel zur Herstellung mechanisch stabiler wärmebeständiger Glasfaservliese bekannt. Diese Bindemittel enthalten
a) Polysäuren mit wenigenstens zwei Carboxylgruppen, deren Anhydriden oder deren Salzen,
b) Polyole mit wenigstens zwei OH-Gruppen sowie
c) einen Phosphor enthaltenden Reaktionsbeschleuniger.

Bevorzugt ist als Polysäure eine polymere Polysäure wie Polyacrylsäure.

Als Polyole können auch aminogruppenhaltige Polyole verwendet werden, die jedoch mindestens zwei OH-Gruppen enthalten. Bevorzugt wird ein spezielles Polyol, nämlich das 2-Bis-[N, N-di(β)-hydroxethyl]-Adipamid verwendet. Die Carboxylgruppen der Polycarbonsäuren sind zu weniger als 35 % mit einer nichtflüchtigen Base wie NaOH neutralisiert.

In der EP 0 651 088 A1 werden die prinzipiell gleichen Bindemittel wie in der EP 0 583 086 B1 zur Verfestigung bzw. Verstärkung von Substraten auf Cellulosebasis eingesetzt.

In der DE 197 29 161 A1 werden ebenfalls formaldehydfreie, wäßrige Bindemittel für Formkörper wie Faserplatten oder Spanplatten beschrieben, die ein rasches Verarbeiten bei niedriger Temperatur erlauben und dem Substrat Wasserfestigkeit verleihen sollen. Diese Bindemittel enthalten mindestens ein Polymerisat (A1), das 0 bis 5 Gew.-% einer α β-ethylenisch ungesättigten Mono- oder Dicarbonsäure einpolymerisiert enthält und das erhältlich ist durch radikalische Polymerisation in Gegenwart von
a) wenigstens einem durch radikalische Polymerisation erhältlichen Polymerisat (A2), das 15 bis 100 Gew.-% einer α, β-ethylenisch ungesättigten Mono- oder Dicarbonsäure einpolymerisiert enthält und
b) wenigstens einem Amin, das mindestens eine lange Kette mit wenigstens 6 C-Atomen umfaßt, wobei das Gewichtsverhältnis (auf Feststoffbasis) von Polymerisat (A1) zu Polymerisat (A2) im Bereich von 7 : 1 bis 1: 7 und das Gewichtsverhältnis von Polymerisat (A2) zu Amin mit langer Kette im Bereich von 20 : 1 bis 2 : 1 liegt. Als langkettige Amine werden solche mit mindestens 6 C-Atomen, insbesondere C₆ bis C₂₂ Alkyl- oder Alkenylamine bevorzugt, die auch Hydroxylgruppen enthalten können. Zusätzlich zu den langkettigen Aminen können auch noch Alkanolamine mit wenigstens zwei Hydroxylgruppen vorhanden sein. Die Herstellung derartiger Systeme, bei denen es sich um eine Kombination aus zwei Polymerisaten handelt, ist kompliziert, wobei die Herstellung eines Polymerisats mit niedriger Säurezahl in Gegenwart eines Polymer mit hoher Säurezahl erfolgt.

In der DE 44 08 688 A1 werden formaldehydfreie Binde-, Imprägnier- oder Beschichtungsmittel zur Herstellung von faserförmigen Flächengebilden auf der Basis von Kunst-, Mineral- und Glasfasern beschrieben, welche
A) ein Polymerisat, das zu 2 bis 100 Gew.-% aus einer ethylenisch ungesättigten Säure oder einem Säureanhydrid als Comonomer aufgebaut ist und
B) mindestens ein spezielles Polyol, ausgewählt aus der Gruppe der Triazine, der Triazintrione, der substituierten, sich von Benzol oder vom Cyclohexan ableitenden Polyole, der aliphatischen Polyole, die eine tertiäre Aminogruppe enthalten oder der hydroxylgruppenhaltigen Derivate der phosphorigen Säure, der Borsäure oder der Phosphorsäure, enthalten.

Aufgabe der Erfindung ist es, die bekannten Bindemittel hinsichtlich Wasserfestigkeit, Verarbeitungstemperaturen und Verarbeitungsdauer weiter zu verbessern.

Überraschenderweise wurde gefunden, daß diese Aufgabe gelöst werden kann durch ein Bindemittel auf Basis einer wäßrigen Lösung oder Dispersion, wobei das Bindemittel enthält:
A) ein Polymerisat aufgebaut aus:
   1) 0 bis 50 Gew.-%, bevorzugt 5 bis 40 Gew.-%, wenigstens einer ethylenisch ungesättigten Dicarbonsäure,
   2) 50 bis 100 Gew.-%, bevorzugt 60 bis 95 Gew.-%, wenigstens einer ethylenisch ungesättigten Monocarbonsäure,
   wobei bis zu 10 Gew.-% der sauren ethylenisch ungesättigten Monomeren durch andere ethylenisch ungesättigte, vorzugsweise wasserlösliche Monomere ersetzt sein können, und
B) ein aliphatisches, aromatisches oder heterocyclisches Amin, das als funktionelle Gruppe zusätzlich zur Aminogruppe weniger als zwei OH-Gruppen enthalten kann, in einer Menge; daß der pH-Wert des Bindemittels bei 2 und 7, bevorzugt bei 2 bis 4, liegt,
C) 0,5 bis 30 Gew.-%, vorzugsweise 1 bis 15 Gew.-%, bezogen auf Festkörper [(A + B)] eines Vernetzungsmittels auf Epoxid- oder Acrylatharzbasis,

Zusätzlich kann die erfindungsgemäße Bindemittelzusammensetzung, bezogen auf Festkörper [(A + B)], wenigstens eine organische Verbindung mit wenigstens zwei Hydroxylgruppen pro Molekül enthalten, bevorzugt ein aliphatisches Polyol mit wenigstens zwei OH-Gruppen. Die Verbindung mit wenigstens zwei OH-Gruppen kann, bezogen auf Festkörper [(A + B)], in einer Menge von 0 bis 20 Gew.-%, bevorzugt 5 bis 15 Gew.-%, bezogen auf Feststoff vorliegen.

Die Polymerisatkomponente A wird bevorzugt durch radikalische Polymerisation nach bekannten Methoden hergestellt. Bevorzugt wird die Lösungspolymerisation mit Wasser als Lösungsmittel. Es kann sich hierbei um das Homopolymerisat einer ethylenisch ungesättigten Monocarbonsäure oder um Copolymerisate von ethylenisch ungesättigten Monocarbonsäuren mit ethylenisch ungesättigten Dicarbonsäuren handeln. Ebenso wie die Monocarbonsäuren sind deren Salze, besonders die Amin- bzw. Ammoniumsalze, und wie die Dicarbonsäuren deren Anhydride und/oder Salze, besonders die Amin- bzw. Ammoniumsalze, geeignet. Bevorzugte ethylenisch ungesättigte Monocarbonsäuren sind Acrylsäure, Methacrylsäure, Vinylessigsäure und/oder Crotonsäure. Bevorzugt als Dicarbonsäuren werden Maleinsäure, 2-Methylmaleinsäure, Fumarsäure, Itaconsäure, 2-Methyl-Itaconsäure, Tetrahydrophtalsäuren sowie die jeweiligen Anhydride und Salze derartiger Dicarbonsäuren verwendet, auch sind die Halbester der Dicarbonsäuren, insbesondere die Monoalkylester wie Monoalkylmaleinat, Monoalkylfümarat geeignet. Bevorzugt werden Mono- und Dicarbonsäuren und/oder deren Derivate verwendet, die wasserlöslich sind. Für die Polymerisation können übliche Zusätze wie bekannte Molekulargewichtsregler, zum Beispiel Mercaptane wie 2-Mercaptopropionsäure oder Disulfite wie Natriumdisulfit oder Verbindungen, die sowohl Veresterungskatalysatoren als auch Molekulargewichtsregler sind, wie zum Beispiel Hypophosphite, zum Beispiel Natriumhypophosphit, verwendet werden. Die bevorzugt verwendeten Polymerisate besitzen Molekulargewichte (Zahlenmittel) im Bereich von 50 000 bis 200 000.

Das Polymerisat A kann neben den als Hauptbestandteilen vorliegenden sauren Monomeren auch bis zu 10 Gew.-%, bezogen auf die Summe der sauren Monomeren, an anderen ethylenisch ungesättigten Monomeren wie Vinylester, zum Beispiel Vinylacetat, oder Acrylsäureester oder Acrylamid enthalten. Bevorzugt sind diese Monomeren wasserlöslich oder mit Wasser mischbar.

Die Carboxylgruppen im Polymerisat A liegen im Bindemittel in teilneutralisierter Form vor, wobei in der Regel 5 bis 20 Mol-% der Säuregruppen neutralisiert sind.

Zur Neutralisation dient die Amin-Komponente B, die ein primäres, sekundäres oder tertiäres Amin oder ein Gemisch dieser Amine sein kann. Bevorzugte Amine sind Dimethylethanolamin, Diisopropylethanolamin, Triethylamin, 1-Methylimidazol sowie Polyamine, zum Beispiel Ethylendiamin.

Das Amin wird dem Polymerisat in einer Menge zugesetzt, daß das resultierende Bindemittel einen pH-Wert im Bereich von 2 bis 7 aufweist.

Als Vernetzungsmittel (Komponente C) werden Epoxid-, Acrylat- oder Resorcinharze eingesetzt, zum Beispiel die an sich bekannten wasserverdünnbaren Epoxidharze auf der Basis von Bisphenol A bzw. Diacrylate. Die Menge an Komponente C beträgt, bezogen auf das Festharz, 0,5 bis 30 Gew.-%, bevorzugt 1 bis 15 Gew.-%.

Das Bindemittel kann weitere Komponente wie mehrwertige Alkohole mit wenigstens zwei Hydroxylgruppen enthalten. Geeignete Polyole sind Glycerin, Glykol, Trimethylolpropran, Butandiol, Pentaerythrit, Sorbitol, Polyvinylalkohol, Mono-, Oligo- und Polysaccharide wie Glucose oder Hydroxyethylcellulose, die in Mengen bis zu 20 Gew.-%, bevorzugt 5 bis 15 Gew.-%, bezogen auf das Festharz eingesetzt werden können.

Die Herstellung des erfindungsgemäßen Bindemittels erfolgt durch Vermischen der Komponenten. Das Bindemittel ist eine wäßrige Lösung, die lagerstabil ist.

Nach einer vorteilhaften Ausführungsform der Erfindung kann die Bindemittelzusammensetzung zusätzlich monomere, d. h. nicht einpolymerisierte ungesättigte Dicarbonsäure in einer Menge bis zu 30 Gew.-%, vorzugsweise von 5 bis 20 Gew.-%, bezogen auf die Summe der eingesetzten Monomeren A1 und A2, enthalten. Der Gehalt an nichteinpolymerisierter ungesättigter Dicarbonsäure kann durch Zumischen zum Polymerisat oder durch Steuerung der Polymerisation erzielt werden.

Überraschenderweise wird mit den erfindungsgemäßen Bindemitteln eine deutliche Verbesserung der Wasserfestigkeit sowie Herabsetzung der Härtungstemperatur während der Herstellung der mit den erfindungsgemäßen Bindemitteln zu verfestigenden Substrate erzielt, wodurch die Taktzeiten erheblich verkürzt und damit die Herstellung der entsprechenden Formkörper deutlich verbilligt werden kann.

Zur Herstellung von Formkörpern wird das Bindemittel in üblicher Weise mit dem zu verfestigenden Substrat gemischt, wobei vorzugsweise die Sprühbeschichtung eines faserförmigen Substrats wie Holzspäne oder Cellulosefasern verwendet wird. Nach dem Besprühen des Substrats mit dem Bindemittel wird bei Temperaturen von 60 bis 150°C bis auf eine Restfeuchte von 10 bis 15 Gew.-%., bezogen auf Substrat, getrocknet und auf diese Weise ein bindemittelhaltiger Rohling, zum Beispiel ein bindemittelhaltiges Vlies erzeugt, das dann anschließend bei der Härtungstemperatur von beispielsweise 180°C bis 240°C ausgehärtet wird. Die Mengenverhältnisse von Bindemittel zu verfestigendem Substrat liegen im Bereich von 1 bis 10 Gew.-% trockenes Bindemittel, bezogen auf feinteiliges oder fasriges Material.

Die Erfindung wird anhand der nachfolgenden Beispiele erläutert.

In den nachfolgenden Beispielen sind alle Teile Gewichtsteile:

### Beispiel 1:

| | |
|---|---|
| Polysäure hergestellt aus 70 % AS und 30 % MAS (als 30 % wäßrige Lösung) (M_{W} 180 000; pH-Wert 0,8) | 100 T |
| Dimethylethanolamin | 4 T |
| Glycerin | 2 T |
| Siquest A 187 (Witco) | 0,3 T |

Nach dem Vermischen entstand eine klare Lösung (pH-Wert 2,1).

### Beispiel 2:

| | |
|---|---|
| Polysäure hergestellt aus 80 % AS und 20 % MAS als 30%ige wäßrige Lösung (M_{w}: 105 000g(mol; pH-Wert 0,9) | 100 T |
| Dimethylethanoamin | 3 T |
| CN 132 (Cray Valley) | 3 T |

Nach dem Vermischen der Komponenten resultierte eine klare Lösung (pH-Wert 3,5).

### Beispiel 3:

| | |
|---|---|
| Polysäure hergestellt aus 100 % AS als 30%ige wäßrige Lösung (M_{w}: 120 000 g/mol, pH-Wert 1,8) | 100 T |
| Dimethylethanolamin | 2,5 T |
| Alberdingk EP 70 | 0,5 T |
| Glycerin | 3,5 T |

Es resultierte ein klare Lösung (pH-Wert 3,3).

### Beispiel 4:

| | |
|---|---|
| Reine Polyacrylsäure als 30%ige wäßrige Lösung (M_{w}: 175 000 g/mol, pH-Wert 1,8) wird mit | 100 T |
| Dimethylethanolamin | 4 T |
| Glycerin | 2 T |
| Siquest A 187 (Witco) versetzt. | 0,3 T |
| Zu diesem Ansatz werden Maleinsäureanhydrid | 10 T |
| Wasser | 20 T |
| Glycerin | 0,6 T |
| Dimethylethanolamin | 1,2 T |
| Siquest A 187 (Witco) zugegeben. | 0,09 T |

Es entstand eine klare Lösung (pH-Wert 2,3).
AS = Acrylsäure
MAS = Maleinsäure
Alberdingk EP 70: wasserverdünnbares Epoxidharz (auf Basis Bisphenol A mit endständigen Epoxidgruppen, Molekulargewicht kleiner 700), Hersteller: Alberdingk Boley
CN 132 Acrylatharz (oligomeres aliphatisches Diacrylat), Hersteller: Cray Valley
Siquest A 187: Epoxyfunktionelles Trimethoxysilan, Hersteller: Witco
Prüfung der Wasserfestigkeit durch Einbrennen des Bindemittels auf einer Glasplatte:
Die Rezepturen der Beispiele 1 bis 4 wurden wie folgt auf Wasserfestigkeit geprüft:
Ein Film des Bindemittels der Dicke 150 µ wird auf einer Glasplatte aufgezogen, getrocknet und 5 Minuten bei 180°C eingebrannt. Die Glasplatte wird anschließend in Wasser gelagert und der Film nach 10 Minuten, 4 Stunden und 24 Stunden beurteilt. Dabei wird eine Skala von 1 bis 10 verwendet:
1. Der Film ist in Aussehen und Kratzfestigkeit unverändert.
2. Filmaussehen unverändert, Kratzfestigkeit leicht verringert.
3. Filmaussehen unverändert, Kratzfestigkeit stark verringert.
4. Filmaussehen unverändert, Film läßt sich von der Platte abkratzen.
5. Film löst sich an den Rändern von der Platte ab.
6. Film bildet einzelne Blasen.
7. Film löst sich zu 30 % ab.
8. Film löst sich zu 60 % ab.
9. Film löst sich zu 90 % ab.
10. Film löst sich vollständig auf.

Die Ergebnisse der Wasserfestigkeit der Filme nach den Beispielen 1 bis 3 sind in der folgenden Tabelle zusammengefaßt:

**Tabelle 1**

| | Beispiel 1 | Beispiel 2 | Beispiel 3 | Beispiel 4 |
|---|---|---|---|---|
| Wasserfestigkeit nach 24 Stunden | 1 | 3-4 | 2-3 | 1 |

In weiteren Versuchen wurden die erfindungsgemäßen Bindemittel hinsichtlich ihrer Wasserfestigkeit mit dem Produkt Acrodur DS 3495 gemäß DE 196 06 393 A1 (BASF) bei unterschiedlichen Einbrennzeiten des Films (entsprechend Härtungszeiten bei der Herstellung eines Formkörpers) verglichen, und zwar einmal bei gleicher Einbrenntemperatur, aber unterschiedlichen Einbrennzeiten des Films, zum anderen bei gleicher Einbrennzeit, aber unterschiedlichen Einbrenntemperaturen. (Die Einbrenntemperatur entspricht bei der Herstellung eines Formkörpers der Härtungstemperatur, d.h. bei der Herstellung einer Holzspanplatte der Preßtemperatur. Die Einbrennzeit entspricht der Härtungszeit bzw. der Preßdauer.)

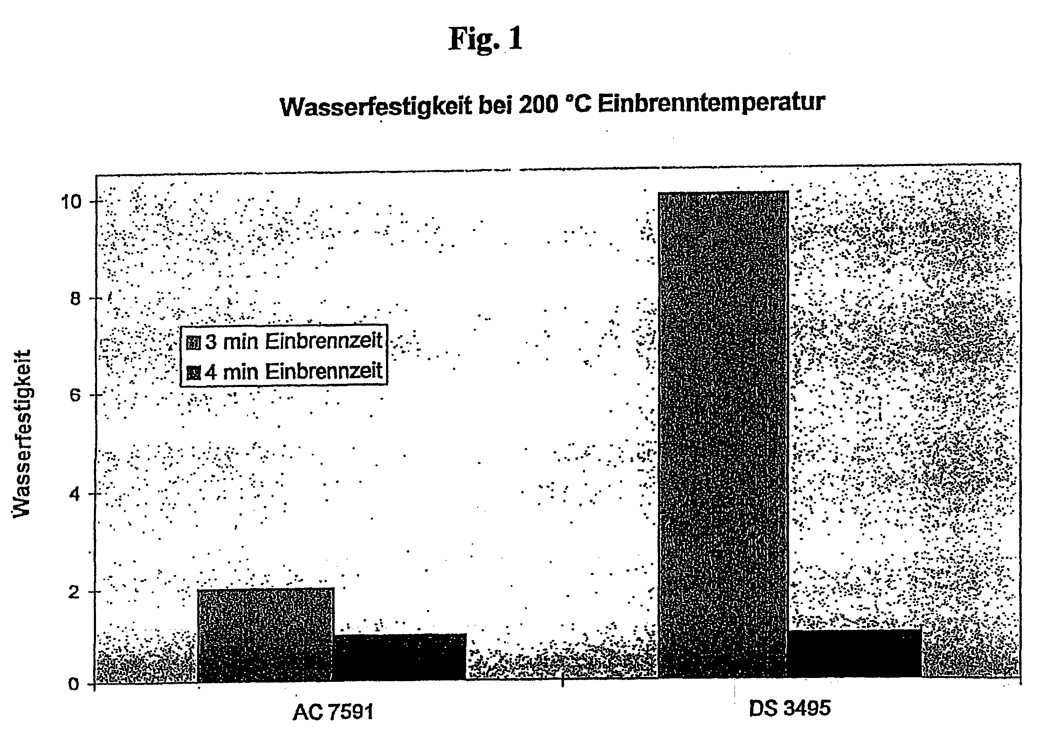

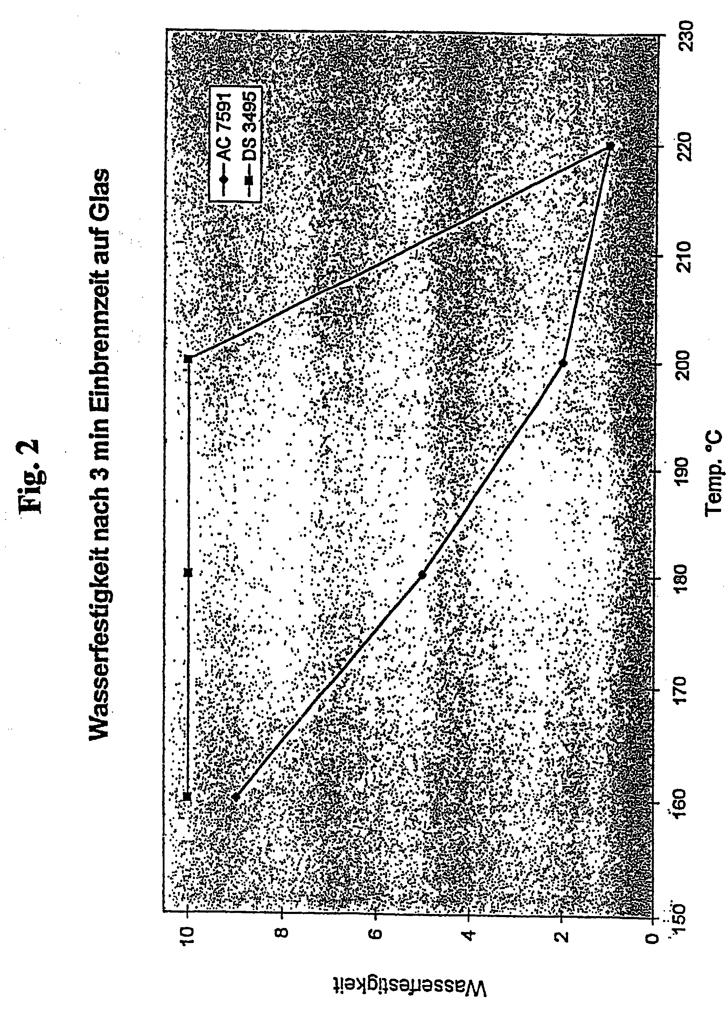

Die Ergebnisse sind in Fig. 1 und 2 dargestellt, wobei Produkt AC 7591 ein Produkt gemäß Beispiel 1 der Erfindung ist.

Fig. 1 zeigt, daß bei der kürzeren Einbrennzeit von 3 Minuten das Produkt gemäß der Erfindung eine recht gute Wasserfestigkeit (2) aufweist, während bei dieser Einbrennzeit das Produkt nach dem Stand der Technik völlig unzureichende Wasserfestigkeit (10) besitzt. Erst bei der wesentlich längeren Einbrennzeit von 4 Minuten sind die Wasserfestigkeiten beider Produkte vergleichbar. Hier ist zu berücksichtigen, daß eine längere Einbrennzeit eine erhebliche Verlängerung der Verfahrensdauer bei der kontinuierlichen Herstellung einer Preßplatte bedeutet, anders ausgedrückt, kann mit dem erfindungsgemäßen Produkt eine wesentliche kürzere Taktzeit im Herstellungsverfahren erzielt werden.

Aus Fig. 2 geht hervor, daß das erfindungsgemäße Produkt insbesondere bei niedrigeren Einbrenntemperaturen (entsprechend Härtungstemperaturen bei der Herstellung des Formkörpers) dem bekannten Produkt deutlich überlegen ist. So weist das erfindungsgemäße Produkt bei einer Einbrenntemperatur von 200°C bereits eine recht gute Wasserfestigkeit (2) auf, während bei dieser Einbrenntemperatur das Produkt nach dem Stand der Technik den völlig unzureichenden Wert von (10) hat. Erst bei einer Einbrenntemperatur von 220°C erreicht das Produkt des Standes der Technik die gleiche niedrige Wasserfestigkeit wie das Produkt gemäß der Erfindung.

In weiteren Versuchen wurden die mechanischen Eigenschaften (Biegefestigkeit, Biege-E-Modul sowie Wasseraufnahme und Dickenquellung) bei Holzfaser-Preßplatten bestimmt, die einmal unter Verwendung des Bindemittels gemäß der Erfindung, zum anderen unter Verwendung des Handelsprodukts Acrodur DS 3495 hergestellt wurden.

### Prüfverfahren und Herstellung der Holzfaser-Preßplatten:

Das Fasermaterial wird in einer Blow-Line mit dem Bindemittel beleimt und bis auf ca. 7 % Restfeuchte getrocknet. Die Trocknung erfolgt bei einer Temperatur von 60°C. Die so beschichteten Fasern werden zu Matten verarbeitet, welche dann bei Temperaturen von 180 bis 230°C zu Platten von 2 bis 3 mm Dicke verpreßt werden. Die Preßzeiten betragen 10 bis 30 Sekunden.

Es werden folgende Meßwerte bestimmt:
Biegefestigkeit (N/mm²):
Biege-E-Modul (MPA):
Wasseraufnahme nach 12 Stunden Wasserlagerung (%)
Dickenquellung nach 12 Stunden Wasserlagerung (%)

Bei den Vergleichsversuchen wurde ein Mix aus 80 % Holz und 20 % Synthesefasern verwendet. Die Beleimungshöhe betrug 7 Gew.-% Bindemittel (Trockenmasse) bezogen auf die Fasern.

Die Ergebnisse sind nachfolgend in Tabelle 2 dargestellt.

**Tabelle 2:**

| Werkzeugtemperatur/ Preßzeiten | Prüfwerte | Acrodur DS 3495: | Beispiel 1 AC 7591 |
|---|---|---|---|
| 230°C / 20+20 sec | Biegefestigkeit (N/mm²) | 52,4 | 56,5 |
| | Biege E-Modul (MPA) | 3172 | 3643 |
| | Wasseraufnahme (%) | 57,4 | 47,3 |
| | Dickenquellung (%) | 21,5 | 18,9 |
| 200°C / 20+20 sec | Biegefestigkeit (N/mm²) | Blasenbildung keine weitere Prüfung möglich | 54,1 |
| | Biege E-Modul (MPA) | | 3229 |
| | Wasseraufnahme (%) | | 56,2 |
| | Dickenquellung (%) | | 17,6 |
| 180°C / 20+20 sec | Biegefestigkeit (N/mm²) | - | 56,5 |
| | Biege E-Modul (MPA) | | 3548 |
| | Wasseraufnahme (%) | | 69,7 |
| | Dickenquellung (%) | | 19,6 |
| 180°C / 10+10 sec | Biegefestigkeit (N/mm²) | - | 49,3 |
| | Biege E-Modul (MPA) | | 2951 |
| | Wasseraufnahme (%) | | 68,8 |
| | Dickenquellung (%) | | 26,1 |

Aus Tabelle 2 geht hervor, daß das erfindungsgemäße Produkt bei der Preßtemperatur von 230°C dem Handelsprodukt überlegen ist, besonders vorteilhaft zeigt sich jedoch des erfindungsgemäße Produkt bei den verfahrenstechnisch für die Herstellung von Formkörpern erwünschten niedrigeren Werkzeugtemperaturen (gleich Preßtemperatur) von 200°C und darunter, wo das Produkt gemäß Stand der Technik wegen Blasenbildung für die weitere Prüfung ausscheidet. (Zur Blasenbildung wird hier auf die weiter oben erwähnte Skala von 1 bis 10 bei der Prüfung der Wasserfestigkeit verwiesen, siehe dort den Wert 6, bei dem sich einzelne Blasen zu bilden beginnen.)

## Patentansprüche

1. Bindemittelzusammensetzung zur Herstellung von Formkörpern aus natürlichen oder synthetischen feinteiligen oder fasrigen Materialien, **gekennzeichnet durch** einen Gehalt an
A) einem Polymerisa aufgebaut aus
1.) 0 bis 50 Gew.-% wenigstens einer ethylenisch ungesättigten Dicarbonsäure, deren Anydride und/oder deren Salzen
2.) 50 bis 100 Gew.-% wenigstens einer ethylenisch ungesättigten Monocarbonsäure und/oder deren Salzen,
wobei bis zu 10 Gew.-% der sauren ethylenisch ungesättigten Monomeren **durch** andere ethylenisch ungesättigte mit den sauren ethylenisch ungesättigten Monomeren copolymerisierbaren Monomeren, vorzugsweise wasserlöslichen Monomeren, ersetzt werden können,
und
B) wenigstens einem Amin, das weniger als zwei OH-Gruppen enthalten kann, in einer Menge, daß der pH-Wert des Bindemittels im Bereich von 2 bis 7 liegt,
C) 0,5 bis 30 Gew.-%, vorzugsweise von 1 bis 15 Gew.-%, bezogen auf Festkörper (A + B) eines Vernetzungsmittels aufEpoxid- oder Acrylatharzbasis.

2. Bindemittel nach Anspruch 1, **dadurch gekennzeichnet, daß** es zusätzlich wenigstens eine Verbindung mit wenigstens zwei Hydroxylgruppen pro Molekül, bevorzugt ein Polyol mit wenigstens zwei OH-Gruppen, in einer Menge von 0 bis 20 Gew.-%, bevorzugt 5 bis 15 Gew.-%, bezogen auf Festkörper, enthält.

3. Bindemittel nach einem der Ansprüche 1 bis 2, **dadurch gekennzeichnet, daß** die Polymerisatkomponente A) als ethylenisch ungesättigte Monocarbonsäure Acrylsäure enthält.

4. Bindemittel nach einem der Ansprüche 1 bis 3, **dadurch gekennzeichnet, daß** die Polymerisatkomponente A) als ethylenisch ungesättigte Dicarbonsäure Maieinsäure enthält.

5. Bindemittel nach Anspruch 1, **dadurch gekennzeichnet, daß** die Aminkomponente B) eine Hydroxylgruppe aufweist.

6. Bindemittel nach Anspruch 1, **dadurch gekennzeichnet, daß** die Aminkomponente B) Dimethylethanolamin ist.

7. Bindemittel nach einem der Ansprüche 1 bis 4, **dadurch gekennzeichnet, daß** die Aminkomponente B) ein ein- oder mehrwertiges primäres, sekundäres oder tertiäres Amin ist.

8. Bindemittel nach Anspruch 7, **dadurch gekennzeichnet, daß** die Aminkomponente B) Triethylamin ist.

9. Bindemittel nach Anspruch 7, **dadurch gekennzeichnet, daß** die Aminkomponente B) 1-Methylimidazol ist.

10. Bindemittel nach einem der Ansprüche 2 bis 9, **dadurch gekennzeichnet, daß** das Bindemittel zusätzlich einen aliphatischen mehrwertigen Alkohol, bevorzugt Glycerin, enthält.

11. Bindemittel nach einem der Ansprüche 1 bis 9, **dadurch gekennzeichnet, daß** es in Form einer wäßrigen Lösung oder Dispersion vorliegt.

12. Bindemittel nach einem der Ansprüche 1 bis 11, **gekennzeichnet durch** einen zusätzlichen Gehalt an nicht polymerisierter monomerer Dicarbonsäure von 0 bis 30 Gew.-%, vorzugsweise von 5 bis 20 Gew.-%, bezogen auf die Monomeren A1 und A2.

13. Verwendung der Bindemittel nach den Ansprüchen 1 bis 12, zur Herstellung von Formkörpern aus natürlichen oder synthetischen feinteiligen oder fasrigen Materialien.

14. Verwendung der Bindemittel nach Anspruch 13, **dadurch gekennzeichnet, daß** das Bindemittel in einer Menge von 1 bis 10 Gew.-% als Festkörper bezogen auffeinteiliges oder fasriges Material eingesetzt wird.

15. Verwendung der Bindemittel nach einem der Ansprüche 13 bis 14, **dadurch gekennzeichnet, daß** als Fasermaterial Holzfaser eingesetzt wird.

16. Formkörper, erhältlich durch Imprägnieren eines Substrats auf Basis von natürlichen oder synthetischen feinteiligen oder fasrigen Materialien mit einem Bindemittel nach einem der Ansprüche 1 bis 12 und Aushärten des imprägnierten Substrats.

17. Formkörper nach Anspruch 16, wobei es sich um Spanplatten und Faserplatten aus Holz bzw. Cellulose handelt.

## Claims

1. A binder composition for producing molded articles from natural or synthetic finely particulate or fibrous materials, **characterized by** a content of
A) a polymer constituted of
1) from 0 to 50 wt.-% of at least one ethylenically unsaturated dicarboxylic acid, the anhydrides and/or salts thereof,
2) from 50 to 100 wt.-% of at least one ethylenically unsaturated monocarboxylic acid, the anhydrides and/or salts thereof,
wherein up to 10 wt.-% of the acidic, ethylenically unsaturated monomers can be replaced by other ethylenically unsaturated monomers, which monomers are copolymerizable with the acidic, ethylenically unsaturated monomers and preferably water-soluble,
and
B) at least one amine, which may contain less than two OH groups, in such an amount that the pH value of the binder is in a range from 2 to 7,
C) from 0.5 to 30 wt.-%, preferably from 1 to 15 wt.-%, relative to the solids (A+B), of a crosslinking agent based on epoxide or acrylate resin.

2. The binder according to claim 1, **characterized in that** the binder additionally contains at least one compound having at least two hydroxyl groups per molecule, preferably a polyol having at least two OH groups, in an amount of from 0 to 20 wt.-%, preferably from 5 to 15 wt.-%, relative to the solids.

3. The binder according to any of claims 1 to 2, **characterized in that** the polymer component A) includes acrylic acid as ethylenically unsaturated monocarboxylic acid.

4. The binder according to any of claims 1 to 3, **characterized in that** the polymer component A) includes maleic acid as ethylenically unsaturated dicarboxylic acid.

5. The binder according to claim 1, **characterized in that** the amine component B) has one hydroxyl group.

6. The binder according to claim 1, **characterized in that** the amine component B) is dimethylethanolamine.

7. The binder according to any of claims 1 to 4, **characterized in that** the amine component B) is a univalent or multivalent primary, secondary or tertiary amine.

8. The binder according to claim 7, **characterized in that** the amine component B) is triethylamine.

9. The binder according to claim 7, **characterized in that** the amine component B) is 1-methylimidazole.

10. The binder according to any of claims 2 to 9, **characterized in that** the binder additionally contains an aliphatic polyhydric alcohol, preferably glycerol.

11. The binder according to any of claims 1 to 9, **characterized in that** the binder is in the form of an aqueous solution or dispersion.

12. The binder according to any of claims 1 to 11, **characterized by** an additional content of non-polymerized monomeric dicarboxylic acid of from 0 to 30 wt.-%, preferably from 5 to 20 wt.-%, relative to the monomers A1 and A2.

13. Use of the binders according to claims 1 to 12 in the production of molded articles from natural or synthetic finely particulate or fibrous materials.

14. Use of the binders according to claim 13, **characterized in that** the binder is used as a solid in an amount of from 1 to 10 wt.-%, relative to finely particulate or fibrous material.

15. Use of the binders according to any of claims 13 to 14, **characterized in that** wood fibers are employed as fibrous material.

16. Molded articles, which can be obtained by impregnating a substrate based on natural or synthetic finely particulate or fibrous materials with a binder according to any of claims 1 to 12 and curing the impregnated substrate.

17. The molded articles according to claim 16, which molded articles are chip boards and fiber boards made of wood or cellulose.

## Revendications

1. Composition de liant utilisée pour la production de corps moulés en matières naturelles ou synthétiques à particules fines ou fibreuses, **caractérisée par** une teneur en
A) un polymérisat, constitué de
1.) 0 à 50 % en poids d'au moins un acide dicarboxylique éthyléniquement insaturé, de ses anhydrides et/ou de ses sels
2.) 50 à 100 % % en poids d'au moins un acide monocarboxylique éthyléniquement insataré et/ou de ses sels,
dans lequel jusqu'à 10 % en poids des monomères acides éthyléniquement insaturés peuvent être remplacés par d'autres monoméres éthyléniquement insaturés, copolymérisables avec les monomères acides à insaturation éthylénique/ de préférence des monomères solubles dans l'eau,
et
B) au moins une aminé, qui peut contenir moins de deux groupés OH, en une quantité telle que le pH du liant se situe dans la gamme de 2 à 7,
C) de 0,5 à 30 % en poids, de préférence de 1 à 15 % en poids par rapport aux corps solides (A + B) d'un agent de réticulation à base de résine époxy ou acrylate.

2. Liant selon la revendication 1, **caractérisé en ce qu'**il contient en plus au moins un composé avec au moins deux groupes hydroxyle par molécule, de préférence un polyol avec au moins deux groupes OH, en une quantité de 0 à 20 % en poids, de préférence 5 à 15 % en poids par rapport aux corps solides.

3. Liant selon l'une quelconque des revendications 1 et 2, **caractérisé en ce que** le composant A) constitué d'un polymérisat contient de l'acide acrylique en tant qu'acide monocarboxylique éthyléniquement insaturé.

4. Liant selon l'une quelconque des revendications 1 à 3, **caractérisé en ce que** le composant A) constitué d'un polymérisat contient de l'acide maléique en tant qu'acide dicarboxylique éthyléniquement insaturé.

5. Liant selon la revendication 1, **caractérisé en ce que** le composant aminé B) présente un groupe hydroxyle.

6. Liant selon la revendication 1, **caractérisé en ce que** le composant amina B) est la diméthyléthanolamine.

7. Liant selon l'une quelconque des revendications 1 à 4, **caractérisé en ce que** le composant aminé B) est une mono- ou poly-amine primaire, secondaire ou tertiaire.

8. Liant, selon la revendication 7, **caractérisé en ce que** le composant aminé B) est la triéthylamine.

9. Liant selon la revendication 7, **caractérisé en ce que** le composant aminé B) est le 1-méthylimidazole.

10. Liant selon l'une quelconque des revendications 2 à 9, **caractérisé en ce que** le liant contient en plus un polyalcool aliphatique, de préférence le glycérol.

11. Liant selon l'une quelconque des revendications 1 à 9, **caractérisé en ce qu'**il se présente sous la forme d'une solution ou dispersion aqueuse.

12. Liant selon l'une quelconque des revendications 1 à 11, **caractérisé par** une teneur supplémentaire en acide dicarboxylique monomère non polymérisé de 0 à 30 % en poids, de préférence de 5 à 20 % en poids par rapport aux monomères A1 et A2.

13. Utilisation des liants selon les revendications 1 à 12, pour la production de corps moulés en matières naturelles ou synthétiques à particules fines ou fibreuses.

14. Utilisation des liants selon la revendication 13, **caractérisée en ce que** le liant est utilisé en une quantité de 1 à 10 % en poids en tant que corps solide par rapport à la matière à particules fines ou fibreuse.

15. Utilisation des liants selon l'une quelconque des revendications 13 à 14, **caractérisée en ce que** de la fibre de bois est utilisée comme matière fibreuse.

16. Corps moulés, pouvant être obtenus par imprégnation d'un substrat à base de matières naturelles ou synthétiques à particules fines ou fibreuses avec un liant selon l'une quelconque des revendications 1 à 12 et durcissement du substrat imprégné.

17. Corps moulés selon la revendication 16, qui sont des panneaux d'agglomérés et de panneaux de fibres de bois ou de cellulose.
